(19) **Europäisches Patentamt / European Patent Office / Office européen des brevets**

(11) **EP 2 124 094 A1**

(12) **EUROPEAN PATENT APPLICATION**
published in accordance with Art. 153(4) EPC

(43) Date of publication:
**25.11.2009 Bulletin 2009/48**

(21) Application number: **07850355.4**

(22) Date of filing: **10.12.2007**

(51) Int Cl.:
**G02F 1/1335** (2006.01)        **G02F 1/1368** (2006.01)

(86) International application number:
**PCT/JP2007/073787**

(87) International publication number:
**WO 2008/093467 (07.08.2008 Gazette 2008/32)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **31.01.2007 JP 2007021200**

(71) Applicant: **Sharp Kabushiki Kaisha Osaka-shi, Osaka 545-8522 (JP)**

(72) Inventors:
• **SHIMADA, Junya**
  **Osaka-shi, Osaka 545-8522 (JP)**
• **IMAI, Hajime**
  **Osaka-shi, Osaka 545-8522 (JP)**
• **KIKUCHI, Tetsuo**
  **Osaka-shi, Osaka 545-8522 (JP)**
• **KITAGAWA, Hideki**
  **Osaka-shi, Osaka 545-8522 (JP)**
• **IMADE, Mitsunori**
  **Osaka-shi, Osaka 545-8522 (JP)**
• **HARA, Yoshihito**
  **Osaka-shi, Osaka 545-8522 (JP)**

(74) Representative: **Müller - Hoffmann & Partner Patentanwälte Innere Wiener Strasse 17 81667 München (DE)**

(54) **LIQUID CRYSTAL DISPLAY DEVICE**

(57)     Reflection-type and transflective-type liquid crystal display devices having a high image quality, in which moiré or coloration is reduced, are provided at low cost.

A liquid crystal display device according to the present invention is a liquid crystal display device having a reflection region in each of a plurality of pixels; the reflection region includes a metal layer, a semiconductor layer, and a reflective layer; a plurality of recesses and protrusions are formed on the surface of the reflective layer; the plurality of recesses are formed according to apertures in the metal layer; the plurality of protrusions are formed so as to conform to the shape of the semiconductor layer; a plurality of pairs among the plurality of recesses that adjoin along a direction include two pairs whose intervals between recesses are different from each other; and a plurality of pairs among the plurality of protrusions that adjoin along a direction include two pairs whose intervals between protrusions are different from each other.

FIG.3

EP 2 124 094 A1

## Description

## TECHNICAL FIELD

The present invention relates to a reflection-type or transflective-type liquid crystal display device capable of performing display by utilizing reflected light.

## BACKGROUND ART

Liquid crystal display devices (LCDs) include the transmission-type liquid crystal display device which utilizes backlight from behind the display panel as a light source for displaying, the reflection-type liquid crystal display device which utilizes reflected light of external light, and the transflective-type liquid crystal display device (reflection/transmission-type liquid crystal display device) which utilizes both reflected light of external light and backlight. The reflection-type liquid crystal display device and the transflective-type liquid crystal display device are **characterized in that** they have smaller power consumptions than that of the transmission-type liquid crystal display device, and their displayed images are easy to see in a bright place. The transflective-type liquid crystal display device is **characterized in that** its screen is easier to see than that of the reflection-type liquid crystal display device, even in a dark place.

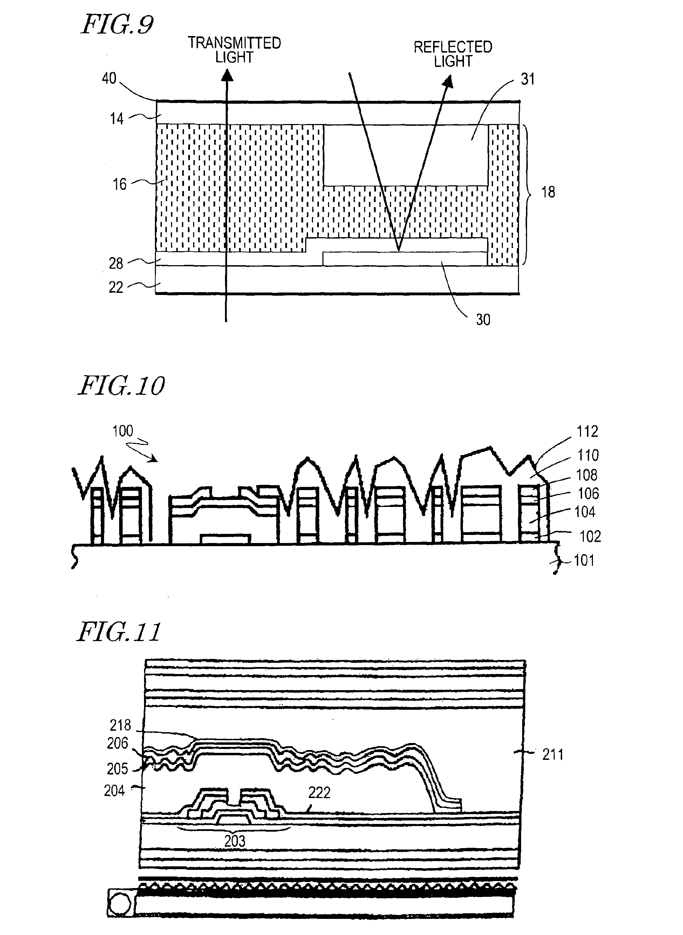

FIG. **10** is a cross-sectional view showing an active matrix substrate **100** in a conventional reflection-type liquid crystal display device (e.g., Patent Document 1).

As shown in this figure, the active matrix substrate **100** includes an insulative substrate **101,** as well as a gate layer **102,** a gate insulating layer **104,** a semiconductor layer **106,** a metal layer **108,** and a reflective layer 110, which are stacked on the insulative substrate **101.** After being stacked on the insulative substrate **101,** the gate layer **102,** the gate insulating layer **104,** the semiconductor layer **106,** and the metal layer **108** are subjected to etching by using one mask, thus being formed so as to have an islandlike multilayer structure. Thereafter, the reflective layer **110** is formed on this multilayer structure, whereby a reflection surface **112** having ruggednesses is formed. Although not shown, transparent electrodes, a liquid crystal layer, a color filter substrate (CF substrate), and the like are stacked above the active matrix substrate **100.**

FIG. **11** is a cross-sectional view of a conventional transflective-type liquid crystal display device (e.g., Patent Document 2).

As shown in this figure, in the conventional transflective-type liquid crystal display device, an interlayer insulating film **204** is formed on a drain electrode **222** of a switching element (TFT) **203,** and a galvanic corrosion preventing film **205,** a reflection electrode film **206,** and an amorphous transparent electrode film **218** are stacked on the interlayer insulating film **204.** The region where the reflection electrode film **206** is formed is a reflection region of the transflective-type liquid crystal display device. Ruggednesses are formed in an upper portion of the interlayer insulating film **204** within the reflection region, and conforming to these ruggednesses, ruggednesses are also formed on the galvanic corrosion preventing film 205, the reflection electrode film **206,** and the amorphous transparent electrode film **218.**

Moreover, in the case where ruggednesses are repeatedly disposed on a reflective layer at a uniform interval, a diffraction pattern (moiré) or coloration may occur in the reflected light due to interference of light. Patent Document 3 describes a liquid crystal display device in which some of the ruggednesses are disposed irregularly in order to suppress occurrence of such a diffraction pattern or the like.

[Patent Document 1] Japanese Laid-Open Patent Publication No. 9-54318
[Patent Document 2] Japanese Laid-Open Patent Publication No. 2005-277402
[Patent Document 3] Japanese Laid-Open Patent Publication No. 2002-14211

## DISCLOSURE OF INVENTION

## PROBLEMS TO BE SOLVED BY THE INVENTION

In the active matrix substrate **100** described in Patent Document 1, portions of the reflective layer **110** are formed so as to reach the insulative substrate **101** in portions where the gate layer **102** and the like are not formed (i.e., portions between the islands, hereinafter referred to as "gap portions"). Therefore, in the gap portions, the surface of the reflection surface **112** is recessed in the direction of the insulative substrate **101,** thus forming a plane having deep dents (or recesses).

In the reflection-type liquid crystal display device or the transflective-type liquid crystal display device, in order to perform bright display with a wide viewing angle, it is necessary to allow incident light entering the display device to be more uniformly and efficiently reflected by the reflection surface **112** across the entire display surface, without causing specular reflection in one direction. For this purpose, it is better if the reflection surface **112** has moderate ruggednesses rather than being a complete plane.

However, the reflection surface **112** of the aforementioned active matrix substrate **100** has deep dents. Therefore, light is unlikely to reach the reflection surface located in lower portions of the dents, and even if at all light reaches there, the reflected light thereof is unlikely to be reflected toward the liquid crystal layer, thus resulting in a problem in that the reflected light is not effectively utilized for displaying. Furthermore, many portions of the reflection surface **112** have a large angle with respect to the display surface of the liquid crystal display device, thus resulting in a problem in that so that the reflected light from those portions is not effectively utilized for displaying.

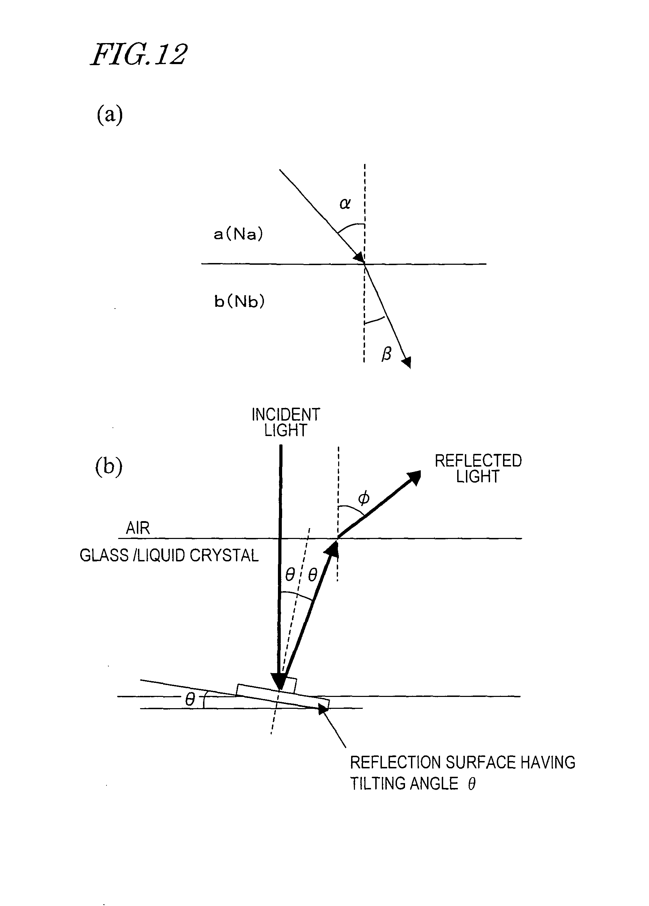

FIG. **12** is a diagram showing a relationship between the tilt of the reflection surface **112** and reflected light. FIG. **12(a)** shows a relationship between an incident angle $\alpha$ and an outgoing angle $\beta$ when light enters a medium b having a refractive index Nb from a medium a having a refractive index Na. In this case, according to Snell's Law, the following relationship holds true.

$$Na \times \sin\alpha = Nb \times \sin\beta$$

FIG. **12(b)** is a diagram showing a relationship between incident light and reflected light when incident light perpendicularly entering the display surface of a liquid crystal display device is reflected from a reflection surface which is tilted by $\theta$ with respect to the display surface (or the substrate). As shown in the figure, the incident light perpendicularly entering the display surface is reflected from the reflection surface which is tilted by angle $\theta$ with respect to the display surface, and goes out in a direction of an outgoing angle $\phi$.

Results of calculating the outgoing angle $\phi$ according to Snell's Law with respect to each angle $\theta$ of the reflection surface are shown in Table 1.

[Table 1]

| $\theta$ | $\phi$ | 90- $\phi$ |
|---|---|---|
| 0 | 0 | 90 |
| 2 | 6.006121 | 83.99388 |
| 4 | 12.04967 | 77.95033 |
| 6 | 18.17181 | 71.82819 |
| 8 | 24.42212 | 65.57788 |
| 10 | 30.86588 | 59.13412 |
| 12 | 37.59709 | 52.40291 |
| 14 | 44.76554 | 45.23446 |
| 16 | 52.64382 | 37.35618 |
| 18 | 61.84543 | 28.15457 |
| 20 | 74.61857 | 15.38143 |
| 20.5 | 79.76542 | 10.23458 |
| 20.6 | 81.12757 | 8.872432 |
| 20.7 | 82.73315 | 7.266848 |
| 20.8 | 84.80311 | 5.19888 |
| 20.9 | 88.85036 | 1.149637 |
| 20.905 | 89.79914 | 0.200856 |

The values in this Table are calculated by assuming that air has a refractive index of 1.0 and the glass substrate and the liquid crystal layer have a refractive index of 1.5. As shown in Table 1, when the angle $\theta$ of the reflection surface exceeds 20 degrees, the outgoing angle $\phi$ becomes very large (i.e., 90- $\phi$ becomes very small), so that most of the outgoing light does not reach the user. Therefore, even if ruggednesses are provided on the reflection surface of the reflective layer, in order to effectively utilize reflected light, it must be ensured in more portions of the reflection surface that the angle $\theta$ is 20 degrees or less.

Since the reflection surface **112** of the aforementioned active matrix substrate **100** has many portions which are greater than 20 degrees, reflected light is not very effectively used for displaying. In order to solve this problem, it might be possible to form an insulating layer under the reflective layer **110** and form the reflective layer **110** upon this insulating layer. However, in this case, a step of forming an insulating layer and a step of forming contact holes for connecting the reflective layer **110** to the drains of the TFTs in the insulating layer are needed, thus resulting in a problem of an increase in the material and the number of steps.

Moreover, in the transflective-type liquid crystal display device of Patent Document 2, after stacking the interlayer insulating film **204** on the drain electrode **222,** a step of forming ruggednesses in an upper portion thereof is needed, and a step of stacking the galvanic corrosion preventing film **205,** the reflection electrode film **206,** and the amorphous transparent electrode film **218** further thereupon is needed. Thus, the conventional transflective-type liquid crystal display device also has a problem in that the material and number of steps are increased for forming the reflection region.

Furthermore, in a conventional transflective-type liquid crystal display device, ruggednesses are formed on the surface of the amorphous transparent electrode film **218,** which is in contact with the liquid crystal layer **211,** and therefore the electric field which is formed across the liquid crystal layer **211** is not uniform, thus making it difficult to uniformly control the liquid crystal orientation in a desired direction in the reflection region. Moreover, although a slope which conforms to the end shape of the interlayer insulating film **204** is formed at an end of the amorphous transparent electrode film **218,** there is also a problem in that this slope disturbs the orientation of the liquid crystal near the end of the reflection region.

In the liquid crystal display device of Patent Document 3, ruggednesses are formed by photolithography technique on a photosensitive resin layer which is formed over switching elements, and thereafter a reflective layer is formed on the ruggednesses. Therefore, in this liquid crystal display device, too, problems similar to those of the transflective-type liquid crystal display device of Patent Document 2 described above will occur.

The present invention has been made in view of the above problems, and an objective thereof is to provide at low cost reflection-type and transflective-type liquid crystal display devices having a high image quality, in which moiré or coloration due to interference of reflected light and the like is reduced.

## MEANS FOR SOLVING THE PROBLEMS

A liquid crystal display device according to the present invention is a liquid crystal display device having a plurality of pixels, and comprising, in each of the plurality of pixels, a reflection region for reflecting incident light toward a display surface, wherein, the reflection region includes a metal layer, a semiconductor layer formed on the metal layer, and a reflective layer formed on the semiconductor layer; a plurality of first recesses or protrusions and a plurality of second recesses or protrusions are formed on a surface of the reflective layer; the plurality of first recesses or protrusions are formed so as to conform to the shapes of recesses (including apertures) or protrusions of the metal layer, and the plurality of second recesses or protrusions are formed so as to conform to the shapes of recesses (including apertures) or protrusions of the semiconductor layer; and the plurality of first recesses or protrusions have a plurality of first pairs of first recesses or protrusions adjoining along a first direction, the plurality of first pairs including two pairs whose intervals between recesses or protrusions are different from each other, or the plurality of second recesses or protrusions have a plurality of second pairs of second recesses or protrusions adjoining along a second direction, the plurality of second pairs including two pairs whose intervals between recesses or protrusions are different from each other.

In one embodiment, the plurality of first recesses or protrusions have a plurality of third pairs of first recesses or protrusions adjoining along a third direction which is different from the first direction, and the plurality of third pairs include two pairs whose intervals between recesses or protrusions are different from each other.

In one embodiment, the plurality of second recesses or protrusions have a plurality of fourth pairs of second recesses or protrusions adjoining along a fourth direction which is different from the second direction, and the plurality of fourth pairs include two pairs whose intervals between recesses or protrusions are different from each other.

In one embodiment, the plurality of first recesses or protrusions have a plurality of third pairs of first recesses or protrusions adjoining along a third direction which is different from the first direction, and the plurality of third pairs include two pairs whose intervals between recesses or protrusions are different from each other; and the plurality of second recesses or protrusions have a plurality of fourth pairs of second recesses or protrusions adjoining along a fourth direction which is different from the second direction, and the plurality of fourth pairs include two pairs whose intervals between recesses or protrusions are different from each other.

In one embodiment, on the surface of the reflective layer, at least either the plurality of first recesses or protrusions or the plurality of second recesses or protrusions are randomly disposed.

In one embodiment, on the surface of the reflective layer, both the plurality of first recesses or protrusions and the plurality of second recesses or protrusions are randomly disposed.

One embodiment comprises a semiconductor element provided corresponding to each of the plurality of pixels, wherein, the metal layer, the semiconductor layer, and the reflective layer are made of same materials as those of a gate electrode, a semiconductor portion, and source and drain electrodes of the semiconductor element, respectively.

One embodiment comprises a liquid crystal layer and an interlayer insulating layer and a pixel electrode interposed between the liquid crystal layer and the reflective layer, wherein a surface of the pixel electrode facing the liquid crystal layer is formed flat without conforming to shapes of the first recesses or protrusions and the second recesses or protrusions of the reflective layer.

## EFFECTS OF THE INVENTION

According to the present invention, reflection-type and transflective-type liquid crystal display devices having a high image quality, in which moiré or coloration due to interference of reflected light and the like is reduced, can be provided at low cost.

## BRIEF DESCRIPTION OF DRAWINGS

[FIG. 1] A diagram schematically showing a cross-sectional shape of a liquid crystal display device according to Embodiment 1.
[FIG. 2] Plan views showing a liquid crystal display device of Embodiment 1, where (a) shows the construction of a pixel region, and (b) shows the construction of a reflection section.
[FIG. 3] Cross-sectional views showing the construction of a TFT section and a reflection section of Embodiment 1, where (a) shows the construction of a reflection section, and (b) shows the construction of a TFT section.
[FIG. 4] A schematic diagram for comparison of a liquid crystal display device of Embodiment 1 and a conventional liquid crystal display device with respect to their reflection section constructions, where (a) is a diagram showing a cross section of a reflection section of Embodiment 1, (b) is a diagram showing a cross section of a reflection section of a conventional liquid crystal display device, and (c) is a diagram describing surface angles at a corner portion of the reflection section.
[FIG. 5] Plan views showing a production method for a reflection section of Embodiment 1.

[FIG. **6**] Cross-sectional views showing a production method for a reflection section of Embodiment 1.

[FIG. **7**] A plan view showing a reflection section of a liquid crystal display device according to Embodiment 2.

[FIG. **8**] A plan view showing a reflection section of a liquid crystal display device according to Embodiment 3.

[FIG. **9**] A cross-sectional view showing a liquid crystal display device according to Embodiment 4.

[FIG. **10**] A cross-sectional view showing an active matrix substrate of a conventional reflection-type liquid crystal display device.

[FIG. **11**] A cross-sectional view of a conventional transflective-type liquid crystal display device.

[FIG. **12**] A diagram showing a relationship between a tilt of a reflection surface and reflected light in a liquid crystal display device, where **(a)** shows a relationship between an incident angle $\alpha$ and an outgoing angle $\beta$ when light enters a medium **b** having a refractive index Nb from a medium **a** having a refractive index Na, and **(b)** is a diagram showing a relationship between incident light and reflected light as well as the angle of the display surface of the liquid crystal display device.

## DESCRIPTION OF REFERENCE NUMERALS

| | |
|---|---|
| **10** | liquid crystal display device |
| **12** | TFT substrate |
| **14** | counter substrate |
| **16** | liquid crystal |
| **18** | liquid crystal layer |
| **22** | transparent substrate |
| **26** | interlayer insulating layer |
| **28** | pixel electrode |
| **30** | reflection section |
| **31** | layer |
| **32** | TFT section |
| **34** | counter electrode |
| **36** | CF layer |
| **38** | transparent substrate |
| **40** | display surface |
| **42** | reflection region |
| **44** | TFT region |
| **46** | transmission region |
| **50** | pixel |
| **52** | source line |
| **54** | gate line |
| **56** | Cs metal layer |
| **58** | contact hole |
| **61** | gate insulating layer |
| **62** | semiconductor layer |
| **63** | reflective layer |
| **65** | aperture |

| | |
|---|---|
| **67** | protrusion |
| **68, 69** | recess |
| **100** | active matrix substrate |
| **101** | insulative substrate |
| **102** | gate layer |
| **104** | gate insulating layer |
| **106** | semiconductor layer |
| **108** | metal layer |
| **110** | reflective layer |
| **112** | reflection surface |
| **203** | switching element |
| **204** | interlayer insulating film |
| **205** | galvanic corrosion preventing film |
| **206** | reflection electrode film |
| **211** | liquid crystal layer |
| **218** | amorphous transparent electrode film |
| **222** | drain electrode |

## BEST MODE FOR CARRYING OUT THE INVENTION

(Embodiment 1)

Hereinafter, with reference to the drawings, a first embodiment of the liquid crystal display device according to the present invention will be described.

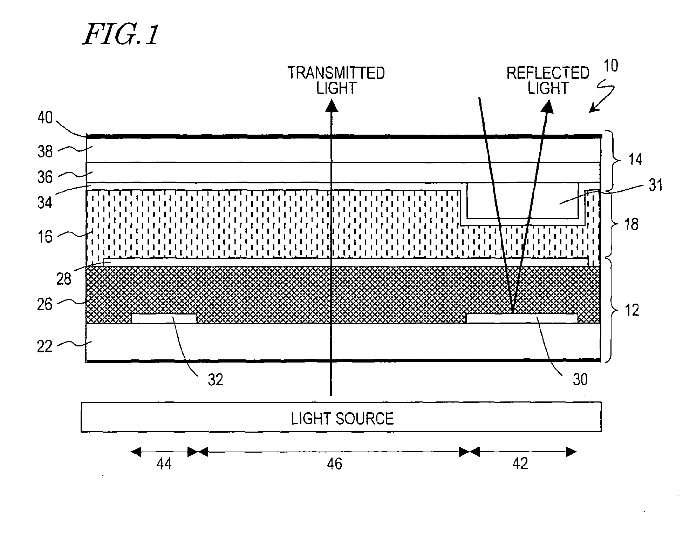

FIG. **1** is a diagram schematically showing a cross-sectional shape of a liquid crystal display device **10** of the present embodiment. The liquid crystal display device **10** is a transflective-type liquid crystal display device (LCD) by an active matrix method. As shown in FIG. **1,** the liquid crystal display device **10** includes a TFT (Thin Film Transistor) substrate **12,** a counter substrate **14** such as a color filter substrate (CF substrate), and a liquid crystal layer **18** containing liquid crystal **16** which is sealed between the TFT substrate **12** and the counter substrate **14.**

The TFT substrate **12** includes a transparent substrate **22,** an interlayer insulating layer **26,** and a pixel electrode **28,** and includes reflection sections **30** and TFT sections **32.** Note that gate lines (scanning lines), source lines (signal lines), Cs lines (storage capacitor electrode lines), and the like are also formed on the TFT substrate **12,** which will be described later.

The counter substrate **14** includes a counter electrode **34,** a color filter layer (CF layer) **36,** and a transparent substrate **38.** The upper face of the transparent substrate **38** serves as a display surface **40** of the liquid crystal display device. Note that although the TFT substrate **12** and the counter substrate **14** each have an alignment film and a polarizer, they are omitted from the figure.

In the liquid crystal display device **10,** a region where a reflection section 30 is formed is referred to as a reflection region **42,** whereas a region where a TFT section **32** is formed is referred to as a TFT region **44.** In the reflection region, light entering from the display surface **40** is reflected by the reflection section **30,** and travels through the liquid crystal layer **18** and the counter substrate **14** so as to go out from the display surface **40.** Furthermore, the liquid crystal display device **10** has transmission regions **46** which are formed in regions other than the reflection regions **42** and the TFT regions **44.** In the transmission regions **46,** light which is emitted from a light source in the liquid crystal display device **10** travels through the TFT substrate **12,** the liquid crystal layer **18,** and the counter substrate **14** so as to go out from the display surface **40.**

Note that, by providing a layer **31** made of transmissive resin or the like on the counter substrate **14** side above each reflection section **30** as shown in FIG. **1,** it is possible to reduce the thickness of the liquid crystal layer **18** in the reflection region **42** to a half of the thickness of the liquid crystal layer **18** in the transmission region **46.** As a result, the optical path length can be made equal between the reflection region **42** and the transmission region **46.** Although FIG. **1** illustrates the layer **31** as being formed between the counter electrode **34** and the CF layer **36,** the layer **31** may be formed on the face of the counter electrode **34** facing the liquid crystal layer **18.**

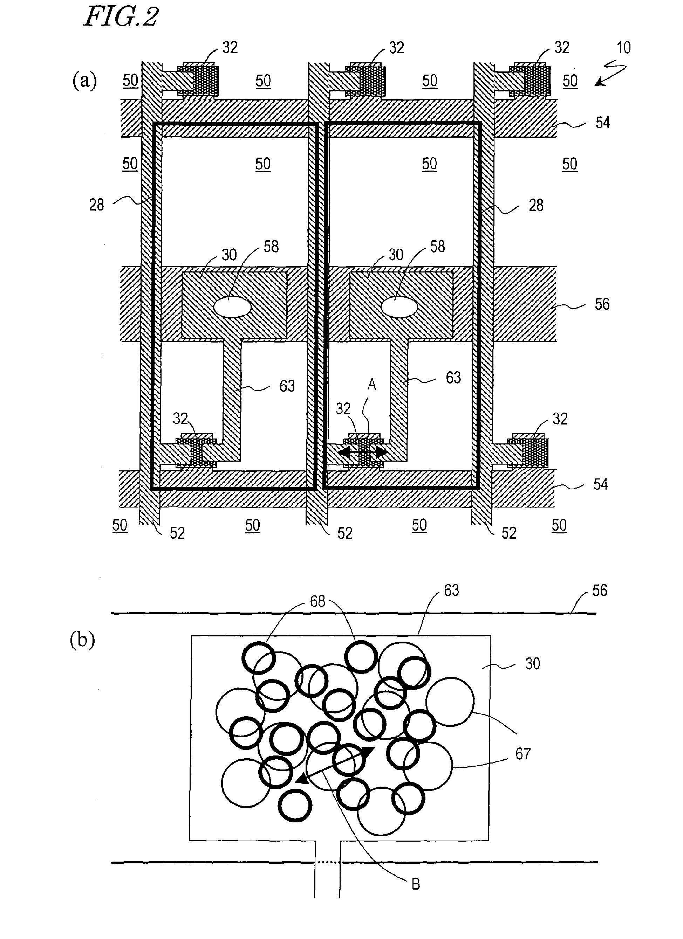

FIG. **2** is plan views more specifically showing the construction of the pixel regions and the reflection sections **30** of the liquid crystal display device **10.**

FIG. **2(a)** is a plan view of a portion of the liquid crystal display device **10,** as seen from above the display surface **40.** As shown in the figure, a plurality of pixels **50** are disposed in a matrix shape in the liquid crystal display device **10.** The aforementioned reflection section **30** and TFT section **32** are formed in each pixel **50,** with a TFT being formed in the TFT section **32.**

In the border of the pixel **50,** source lines **52** extend along the column direction (up-down direction in the figure), and gate lines (also referred to as gate metal layers) **54** extend along the row direction (right-left direction in the figure). In the central portion of the pixel **50,** a Cs line **56** (Cs metal layer or metal layer **56**) extends along the row direction. In the interlayer insulating layer **26** of the reflection region **30,** a contact hole **58** for connecting the pixel electrode **28** and the drain electrode of the TFT is formed.

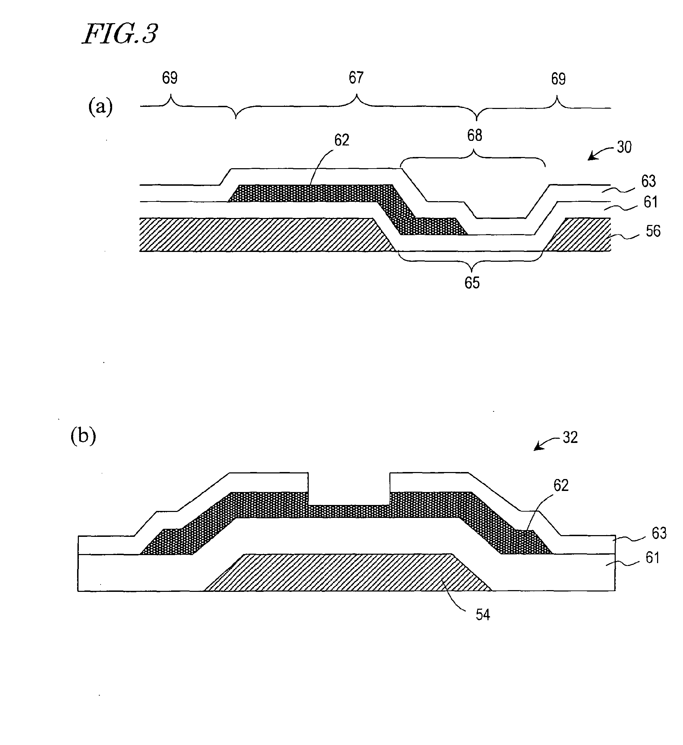

FIG. **2(b)** is a plan view schematically showing the construction of the reflection section **30** above the Cs metal layer **56.** In this figure, the contact hole **58** is omitted from illustration. As will be described later with reference to FIG. **3,** the reflection section **30** includes a gate insulating layer **61** formed on the Cs metal layer **56,** a semiconductor layer **62** formed on the gate insulating layer **61,** and a reflective layer **63** formed on the semiconductor layer **62.**

As shown in the figure, a plurality of protrusions **67** and recesses **68** are provided on the surface of the reflective layer **63.** Although 18 recesses **68** and 11 protrusions **67** are illustrated herein for ease of understanding the construction, more recesses **68** may actually be formed. The plurality of recesses **68** are formed so as to conform to the shapes of the apertures (or recesses) **65** in the Cs metal layer **56,** whereas the protrusion **67** are formed so as to conform to the shapes of the semiconductor layer **62,** which is formed in island shapes.

The Cs metal layer **56** may be formed in island shapes, and protrusions may be formed so as to conform to their shapes, instead of apertures (or recesses) **65.** Apertures (or recesses) may be formed in a semiconductor layer **62** which is formed so as to cover the reflection section **30,** and recesses may be formed so as to conform to their shapes, instead of protrusions **67.** In the present specification, any recess **68** or a protrusion replacing it will be referred to as a first recess or protrusion, and any protrusion **67** or a recess replacing it will be referred to as a second recess or protrusion.

The recesses **68** (or first recesses or protrusions) and the protrusions **67** (or second recesses or protrusions) are both randomly disposed. However, the protrusions **67** and the recesses **68** do not need to be perfectly randomly disposed, but may be randomly disposed in portions of the surface of the reflective layer **63.** Moreover, a layout lacking symmetry or an anisotropic layout may be adopted.

In either case, a plurality of pairs (first pairs) of recesses **68** adjoining along a direction (first direction) include two pairs whose intervals between recesses **68** are different from each other. Moreover, a plurality of pairs (second pairs) of protrusions **67** adjoining along a direction (second direction) include two pairs whose intervals between protrusions **67** are different from each other.

Moreover, a plurality of pairs (third pairs) of recesses **68** adjoining along a direction (third direction) which is different from the first direction may include two pairs whose intervals between recesses **68** are different from each other, and a plurality of pairs (fourth pairs) of protrusions 67 adjoining along a direction (fourth direction) which is different from the second direction may include two pairs whose intervals between protrusions **67** are different from each other. With such layout methods, it becomes possible to reduce occurrence of moiré or coloration due to interference of reflected light.

Next, with reference to FIG. **3,** the construction of the reflection section **30** and the TFT section **32** will be described more specifically.

FIG. 3**(a)** shows a cross section of the reflection section **30** (a cross section of a portion shown by arrow **B** in FIG. **2(b)).** As shown in the figure, in the reflection section **30,** the Cs metal layer (metal layer) **56,** the gate insulating layer (insulating layer) **61,** the semiconductor layer **62,** and the reflective layer **63** are stacked. The semiconductor layer **62** is composed of an intrinsic amorphous silicon layer (Si(i) layer) and an n+ amorphous silicon layer (Si(n+) layer) which is doped with phosphorus, for example.

The Cs metal layer **56** has an aperture **65,** such that a portion of the semiconductor layer **62,** which is formed in an island shape, is located inside the aperture **65.** A recess **68** is formed on the surface of the reflective layer **63** above the aperture **65,** whereas a protrusion **67** is formed on the surface of the reflective layer **63** above the semiconductor layer **62.** Moreover, the portion of the surface of the reflective layer **63** where no underlying semiconductor layer **62** is formed becomes a recess **69.** Level differences are formed in the reflective layer **63** on the semiconductor layer **62** inside the recess **68.**

The recess **68** is formed by the gate insulating layer **61,** the semiconductor layer **62,** and the reflective layer **63** being formed above the aperture **65** of the Cs metal layer **56,** whereby the reflective layer **63** becomes dented. On the other hand, the protrusion **67** is created by the reflective layer **63** being formed on the semiconductor layer **62,** whereby the reflective layer **63** protrudes. Note that, a recess (dent) may be formed in the Cs metal layer **56,** instead of an aperture **65.** In that case, the recess **68** is to be formed in accordance with that recess of the Cs metal layer.

By adding a level difference to the side face of the aperture **65** of the Cs metal layer **56,** a level difference may be introduced to the slope of the recess **68.** Moreover, by adding a level difference to the side face of the semiconductor layer **62,** a level difference may be introduced to the slope of the protrusion **67.**

FIG. **3(b)** is a diagram showing the construction of the gate metal layer (metal layer) **54,** the gate insulating layer **61,** the semiconductor layer **62,** and the reflective layer **63** in the TFT section **32,** and is a cross-sectional view of a portion at arrow A in FIG. **2(a).** The gate metal layer **54** in the TFT section **32** is formed concurrently with and from the same member as the Cs metal layer **56** in the reflection section **30.** Similarly, the gate insulating layer **61,** the semiconductor layer **62,** and the reflective layer **63** in the TFT section **32** are formed concurrently with and from the same members as, respectively, the gate insulating layer **61,** the semiconductor layer **62,** and the reflective layer **63** in the reflection section **30.** The reflective layer **63** is connected to the drain electrode of the TFT.

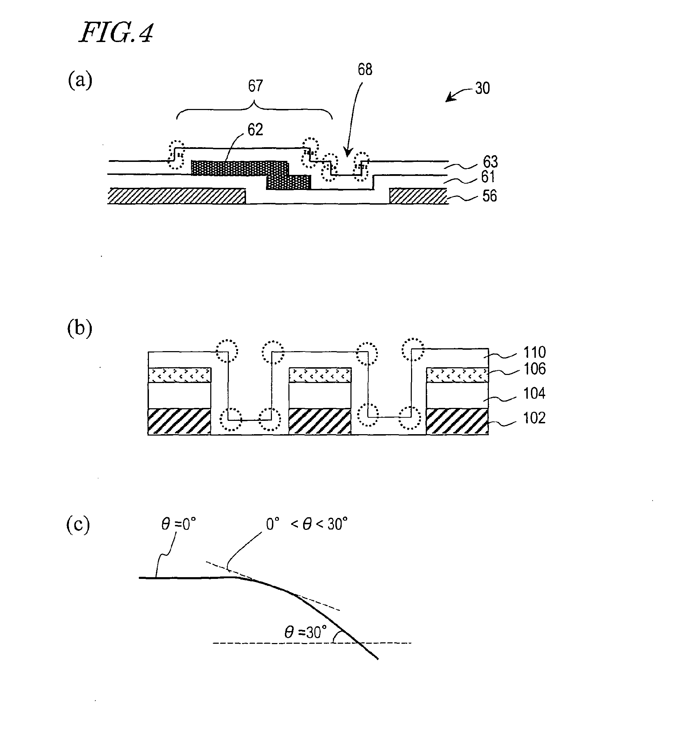

FIG. **4** is cross-sectional views for structural comparison between the reflection section **30** of Embodiment 1 and the reflection section of the conventional liquid crystal display device shown in FIG. **10.** FIG. 4**(a)** schematically shows the structure of the reflection section **30** of Embodiment 1, and FIG. **4(b)** schematically shows the structure of the reflection section of the conventional liquid crystal display device. Note that, in these figures, for simplicity, the slopes of each layer of the reflection section 30 and the slopes of each layer of the conventional liquid crystal display device are illustrated as vertical planes, and the corner portions of each level difference (portions shown by dotted circles in the figure) are illustrated as making perpendicular turns.

As shown in these figures, on the surface of the reflective layer **63** in the reflection section **30** of Embodiment 1, a total of eight corner portions are formed by one recess **68** and one protrusion **67.** On the other hand, in the conventional liquid crystal display device, only four corner portions are formed in one recess of the reflection section.

Although these corner portions are illustrated as being perpendicular in FIG. **4,** in an actual corner portion, as shown in FIG. **4(c),** a face having angles which are larger than 20 degrees (exemplified as 30 degrees in this figure) with respect to the substrate is continuously formed from a plane (with an angle of 0 degrees) which is parallel to the substrate. Therefore, by forming more recesses in the reflection section, it becomes possible to form more faces (effective reflection surfaces) whose angle with respect to the substrate is 20 degrees or less on the surface of the reflective layer.

Moreover, since the effective reflection surfaces that are formed in a corner portion have various tilting angles which are different from one another, the reflected light will not travel in one fixed direction. Therefore, by forming more recesses, it becomes possible to obtain more reflected light which spans a broad range. Moreover, by increasing the number of recesses and ensuring that the tilting angle of the side face of any recess is 20 degrees or less, more reflected light which spans an even broader range can be obtained.

As shown in FIGS. **4(a)** and **(b),** more recesses and protrusions than in the conventional liquid crystal display device are formed in the reflection section **30** of Embodiment 1. Since more corner portions are therefore formed, it is possible to form more effective reflection surfaces on the surface of the reflective layer **63,** whereby more light can be reflected toward the display surface across a broad range. Moreover, the recess **68** and the protrusion **67** are formed in accordance with the shapes to which the Cs metal layer 56 and the semiconductor layer **62** are shaped. Therefore, the shapes, depths, and the slope tilting angles of the recess and protrusion can be easily adjusted during the shaping of the Cs metal layer **56** and the semiconductor layer **62.**

Moreover, the reflective layer **63** which is located inside the recess **68** in Embodiment 1 is formed above the gate insulating layer **61,** or above the gate insulating layer **61** and the semiconductor layer **62.** On the other hand, in the conventional liquid crystal display device, the reflective layer inside the recess is directly formed on the glass substrate, via neither the gate insulating layer nor the semiconductor layer. Therefore, the bottom face of the recess **68** of Embodiment 1 is formed so as to be shallower than the bottom face of a recess of the conventional liquid crystal display device. As a result, incident light can be reflected more effectively across a broad range.

In the conventional liquid crystal display device, the bottom face of a recess is formed at a deep position, so that the tilting angle of the recess inner surface is large, which makes it difficult to form a large number of effective reflection surfaces having a tilt of 20 degrees or less within the recess. Moreover, since this recess is formed by forming the gate layer **102,** the gate insulating layer 104, and the semiconductor layer **106,** and thereafter altogether removing these layers, it has been difficult to increase the effective reflection surface by controlling the tilting angle of the recess inner surface.

Moreover, in the display device of the present embodiment, a recess 68 and a protrusion 67 are formed in accordance with the shapes of the Cs metal layer 56 and the semiconductor layer 62, and therefore the position, size, and shape of the recess 68 and the protrusion 67 can be adjusted when stacking these layers. As a result, the tilt of the slopes of the recess 68 and the protrusion 67 can be controlled, whereby a larger number of effective reflection surfaces with a tilt or 20 degrees or less can be formed, thus allowing more light to be reflected toward the display surface.

Furthermore, in the liquid crystal display device of the present embodiment, as shown in FIG. 1, the faces of the interlayer insulating layer 26 and the pixel electrode 28 that are on the liquid crystal layer 18 side are formed flat without conforming to the shapes of the recesses 68 and the protrusions 67 of the reflective layer 63, similarly to the face of the counter electrode 34 that is on the liquid crystal layer 18 side. Therefore, as compared to the conventional transflective-type liquid crystal display device shown in FIG. 11, the electric field which is formed across the liquid crystal layer 18 becomes uniform, thus making it possible to uniformly control the orientation of the liquid crystal of the reflection region 42 in a desired direction.

Moreover, since no level differences are formed in the pixel electrode 28 near the ends of the reflection section 30, the liquid crystal orientation is not disturbed. As a result, according to the present embodiment, a liquid crystal display device can be provided which has a high transmittance and excellent viewing angle characteristics, with little display unevenness.

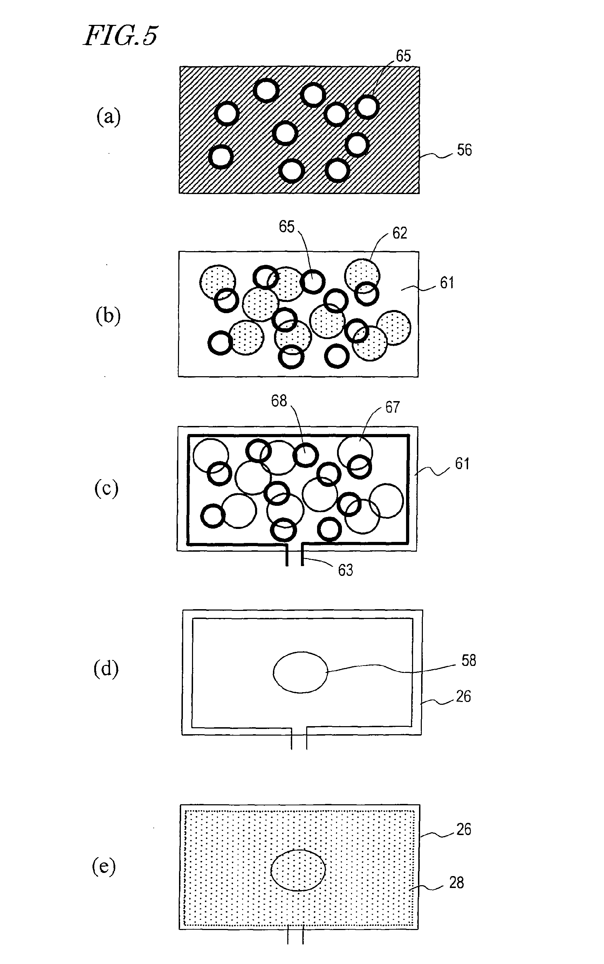

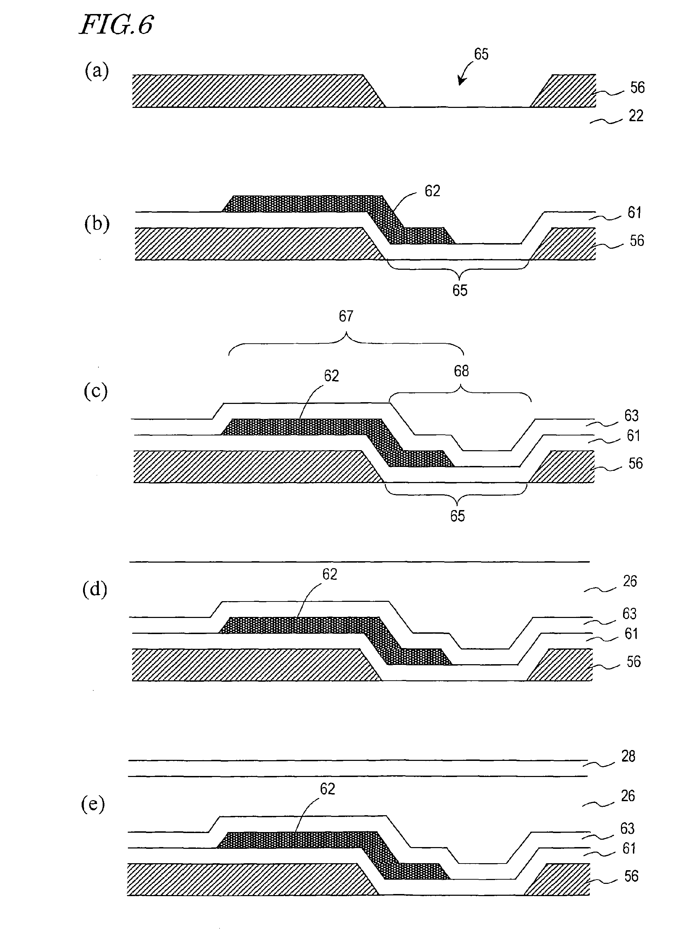

Next, a production method for the TFT substrate 12 will be described with reference to FIG. 5 and FIG. 6. FIG. 5 is plan views showing a production process, in the reflection region 42, for the TFT substrate 12; and FIG. 6 is cross-sectional views showing a production process, in the reflection region 42, for the TFT substrate 12 (a portion shown at arrow B in FIG. 2(b)).

As shown in FIG. 5(a) and FIG. 6(a), first, by a method such as sputtering, a thin metal film of Al (aluminum) is formed on the transparent substrate 22 having been cleaned. Other than Al, this thin metal film may be formed by using Ti (titanium), Cr (chromium), Mo (molybdenum), Ta (tantalum), W (tungsten), or an alloy thereof, etc., or formed from a multilayer body of a layer of such materials and a nitride film.

Thereafter, a resist film is formed on the thin metal film, and after forming a resist pattern through an exposure-development step, a dry or wet etching is performed to form the Cs metal layer (metal layer) 56 having the apertures 65. The thickness of the Cs metal layer 56 is 50 to 1000 nm, for example. Note that, although the apertures 65 are illustrated as being formed in the Cs metal layer 56, a projecting shape of Cs metal layer 56 (or an island-shaped layer) may be formed at the position of each aperture, by using a resist pattern in which the light shielding portions and the transmitting portions are inverted. In this step, the gate line (gate metal layer) 54 shown in FIG. 2(a) and the gate metal layer 54 of the TFT section 32 shown in FIG. 3(a) are also formed concurrently from the same metal.

Next, as shown in FIG. 5(b) and FIG. 6(b), by using P-CVD technique and a gaseous mixture of $SiH_4$, $NH_3$, and $N_2$, the gate insulating layer 61 composed of SiN (silicon nitride) is formed across the entire substrate surface. The gate insulating layer 61 may also be composed of $SiO_2$ (silicon oxide), $Ta_2O_5$ (tantalum oxide), $Al_2O_3$ (aluminum oxide), or the like. The thickness of the gate insulating layer 61 is 100 to 600 nm, for example. In this step, the gate insulating layer 61 of the TFT section 32 shown in FIG. 3(b) is also formed concurrently.

Next, on the gate insulating layer 61, an amorphous silicon (a-Si) film and an $n^+$a-Si film obtained by doping amorphous silicon with phosphorus (P) are formed. The thickness of the a-Si film is 30 to 300 nm. The thickness of the $n^+$a-Si film is 20 to 100 nm. Thereafter, these films are shaped by photolithography technique, whereby the semiconductor layer 62 is formed in island shapes. Recess (dents) or apertures may be formed in the semiconductor layer 62 by using a resist pattern in which the light shielding portions and the transmitting portions are inverted. In this step, the semiconductor layer 62 of the TFT section 32 shown in FIG. 3(b) is also formed concurrently.

Next, as shown in FIG. 5(c) and FIG. 6(c), a thin metal film of Al or the like is formed across the entire substrate surface by sputtering technique or the like, thus forming the reflective layer 63. For the thin metal film, the materials which are mentioned above as materials for the Cs metal layer 56 may be used. The thickness of the reflective layer 63 is 30 to 1000 nm or less.

At this time, the recess 68 is formed on the surface of the reflective layer 63 above each aperture 65 in the Cs metal layer 56, and the protrusion 67 is formed on the surface of the reflective layer 63 above the semiconductor layer 62. In this step, the reflective layer 63 of the TFT section 32 shown in FIG. 3(b) is also formed concurrently, and in the TFT section 32, the reflective layer 63 forms a source electrode and a drain electrode of the TFT. Also at this time, the source line 52 in FIG. 2(a) is also formed as a portion of the reflective layer 63.

Next, as shown in FIG. 5(d) and FIG. 6(d), a photosensitive acrylic resin is applied by spin-coating, whereby the interlayer insulating layer (interlayer resin layer) 26 is formed. The thickness of the interlayer insulating layer 26 is 0.3 to 5 μm. Although a thin film such as $SiN_x$ or $SiO_2$ may be formed by P-CVD technique as a protection film between the reflective layer 63 and the interlayer insulating layer 26, such is omitted from the figure. The thickness of the protection film is 50 to 1000 nm. The interlayer insulating layer 26 and the protection film are formed not only on the reflection region 42, but also on the entire upper surface of the transparent substrate **22** including the TFT region **44.** Thereafter, through a development process using an exposure apparatus, a contact hole **58** is formed near the center of the reflection section **30.**

Next, as shown in FIG. **5(e)** and FIG. **6(e),** a transparent electrode film of ITO, IZO, or the like is formed on the interlayer insulating layer **26** by sputtering technique or the like, and this transparent electrode film is subjected to pattern shaping by photolithography technique, whereby the pixel electrode **28** is formed. The pixel electrode **28** is formed not only on the reflection region **42** but also on the entire upper surface of the pixel including the TFT region **44.**

In the reflection region **42,** the pixel electrode **28** is formed above the interlayer insulating layer **26** and the contact hole **58,** such that the metal member of the pixel electrode **28** is in contact with the reflective layer **63** via the contact hole **58.** As a result, the drain electrode of the TFT in the TFT section **32** is electrically connected to the pixel electrode **28** via the contact hole **58.** In the above step, the upper face of the interlayer insulating layer **26** and the surface of the pixel electrode **28** are formed flat without conforming to the shapes of the recesses **68** and the protrusions **67** of the reflective layer **63.**

Preferably, as many recesses **68** and protrusions **67** as possible are formed on the reflective layer **63.** Therefore, it is preferable that as many apertures in the Cs metal layer **56** and island shapes of semiconductor layer **62** as possible are formed on the reflection surface, within the limitations of the masks and photoexposure during the production step. The preferable maximum width of each aperture in the Cs metal layer **56** and the semiconductor layer **62** is 2 to 17 $\mu$m.

According to the present embodiment, it is possible to provide a liquid crystal display device which is capable of performing high-quality displaying with a high luminance, in which reflected light is efficiently utilized and moiré and coloration due to interference of reflected light is reduced.

(Embodiment 2)

Hereinafter, a second embodiment of the liquid crystal display device according to the present invention will be described. Constituent elements which are identical to the constituent elements of Embodiment 1 are denoted by like reference numerals, and the descriptions thereof are omitted.

The liquid crystal display device of the present embodiment basically has the same construction as that of the liquid crystal display device **10** of Embodiment 1 described above, except only for the layout of the recesses **68** and the protrusions **67** which are formed on the reflection section **30.** Therefore, the layout of the recesses **68** and the protrusions 67 will be mainly described below, while omitting the descriptions of any other portions.

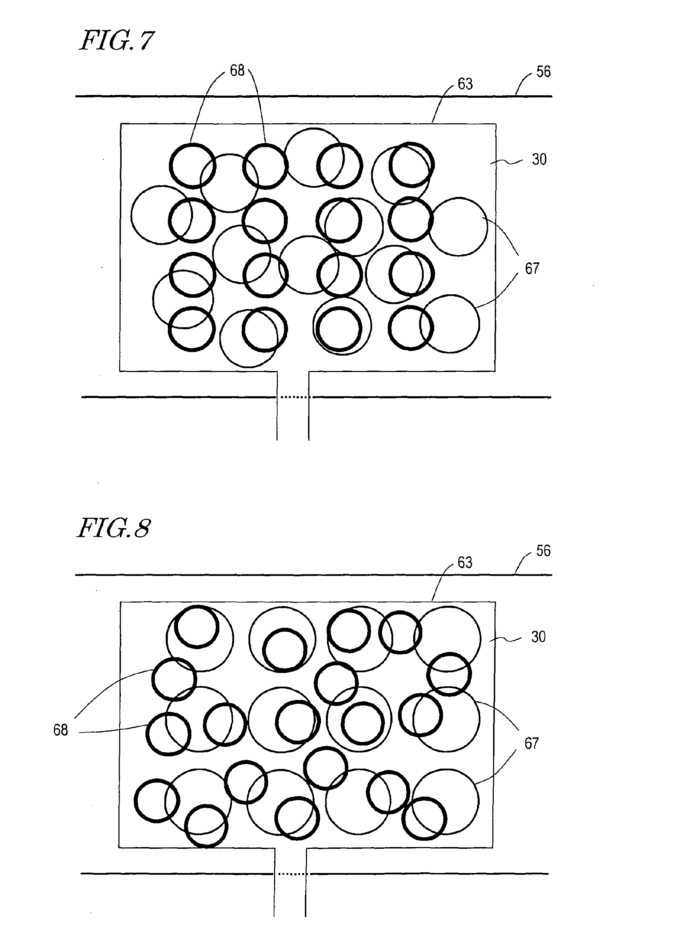

FIG. **7** is a plan view schematically showing the reflection section **30** of the liquid crystal display device according to Embodiment 2, which corresponds to FIG. **2(b)** showing the reflection section **30** of Embodiment 1. On the surface of the reflective layer **63** in the reflection section **30,** as shown in the figure, a plurality of protrusions **67** and recesses **68** are formed. Similarly to Example 1, the Cs metal layer **56** may be formed in island shapes, and protrusions may be formed so as to conform to their shapes, instead of apertures (or recesses) **65.** Apertures (or recesses) may be formed in the semiconductor layer **62,** and recesses may be formed so as to conform to their shapes, instead of protrusions **67.**

As shown in the figure, recesses **68** (or first recesses or protrusions) are disposed at equal intervals along the vertical direction and along the lateral direction, whereas the protrusions **67** (or second recesses or protrusions) are randomly disposed similarly to Embodiment 1. Note that the protrusions **67** do not need to be perfectly randomly disposed, but may be randomly disposed in portions of the surface of the reflective layer **63.** Moreover, a layout lacking symmetry or an anisotropic layout may be adopted.

In either case, a plurality of pairs (second pairs) of protrusions **67** adjoining along a direction (second direction) include two pairs whose intervals between protrusions **67** are different from each other. Moreover, a plurality of pairs (fourth pairs) of protrusions **67** adjoining along a direction (fourth direction) which is different from the second direction may include two pairs whose intervals between protrusions **67** are different from each other. With such layout methods, it becomes possible to reduce occurrence of moiré or coloration due to interference of reflected light.

(Embodiment 3)

Hereinafter, a third embodiment of the liquid crystal display device according to the present invention will be described. Constituent elements which are identical to the constituent elements of Embodiment 1 are denoted by like reference numerals, and the descriptions thereof are omitted.

The liquid crystal display device of the present embodiment basically has the same construction as that of the liquid crystal display device 10 of Embodiment 1 described above, except only for the layout of the recesses **68** and the protrusions **67** which are formed on the reflection section **30.** Therefore, the layout of the recesses **68** and the protrusions **67** will be mainly described below, while omitting the descriptions of any other portions.

FIG. 8 is a plan view schematically showing the reflection section **30** of the liquid crystal display device of Embodiment 3, which corresponds to FIG. **2(b)** showing the reflection section **30** of Embodiment 1. On the surface of the reflective layer **63** in the reflection section **30,** as shown in the figure, a plurality of protrusions **67** and recesses **68** are formed. Similarly to Example 1, the Cs metal layer **56** may be formed in island shapes, and protrusions may be formed so as to conform to their shapes, instead of apertures (or recesses) **65.** Aperture (or recesses) may be formed in the semiconductor layer **62,** and recesses may be formed so as to conform to their shapes, instead of protrusions **67.**

As shown in the figure, the recesses **68** (or first recesses or protrusions) are randomly disposed similarly to Embodiment 1, whereas the protrusions **67** (or second recesses or protrusions) are disposed at equal intervals along the vertical direction and along the lateral direction. Note that the recesses **68** do not need to be perfectly randomly disposed, but may be randomly disposed in portions of the surface of the reflective layer **63.** Moreover, a layout lacking symmetry or an anisotropic layout may be adopted.

In either case, a plurality of pairs (first pairs) of recesses **68** adjoining along a direction (first direction) include two pairs whose intervals between recesses **68** are different from each other. Moreover, a plurality of pairs (third pairs) of recesses **68** adjoining along a direction (third direction) which is different from the first direction may include two pairs whose intervals between recesses **68** are different from each other. With such layout methods, it becomes possible to reduce occurrence of moiré or coloration due to interference of reflected light.

(Embodiment 4)

Hereinafter, with reference to the drawings, a fourth embodiment of the liquid crystal display device according to the present invention will be described. Constituent elements which are identical to the constituent elements of Embodiments 1 to 3 are denoted by like reference numerals, and the descriptions thereof are omitted.

FIG. **9** is a diagram schematically showing a cross-sectional shape of the liquid crystal display device of the present embodiment. This liquid crystal display device is based on the liquid crystal display devices of Embodiments 1 to 3 from which the interlayer insulating layer **26** is excluded, and is identical to the liquid crystal display devices of Embodiments 1 to 3 except for the points discussed below. Note that, in FIG. **9,** the detailed structure of the counter substrate **14** and the TFT section **32** are omitted from illustration.

As shown in the figure, in Embodiment 4, no interlayer insulating layer **26** is formed, and therefore the pixel electrode **28** is formed upon the reflective layer **63** in the reflection section **30** and the TFT section **32,** via an insulative film not shown. The structure and production method for the reflection section **30** and the TFT section **32** are the same as those which were described in Embodiment 1 except that the interlayer insulating layer **26** is eliminated. The pixel layout and wiring structure in the display device are also similar to what is shown in FIG. **2(a).** Also with this construction, similarly to Embodiments 1 to 3, the effective reflection surface of the reflective layer **63** is expanded in area, so that more light can be reflected toward the display surface.

Embodiments 1 to 4 illustrate that the apertures **65** in the Cs metal layer **56,** the semiconductor layer **62,** the protrusions **67,** and the recesses **68** are circular, but they may be formed into ellipses, polygons such as triangles or rectangles, or formed into various shapes such as recesses or protrusions with sawtoothed edges, or combinations thereof.

As has been illustrated by the above Embodiments, a liquid crystal display device according to the present invention includes a large number of level differences and corner portions on the surface of a reflective layer, as well as a large number of slopes with a tilting angle of 20 degrees or less, and therefore acquires reflection regions with broad effective reflection surfaces and excellent scattering characteristics. Moreover, since the shape of the reflective layer surface is not likely to have symmetry, occurrence of moiré and coloration due to interference of reflected light can be reduced or prevented. Thus, a liquid crystal display device having a high brightness and being capable of clear displaying can be provided.

Moreover, since the level differences and corner portions on the reflection surface are formed in accordance with the shapes of the Cs metal layer and the semiconductor layer just when they are shaped, reflection regions having excellent reflection characteristics can be easily obtained without increasing the production steps. Furthermore, since the liquid crystal display device according to the present invention is formed by the above-described production method, it can be produced with the same material and the same steps as those of a transmission-type liquid crystal display device. Therefore, a high-quality liquid crystal display device can be provided inexpensively.

Furthermore, according to the present invention, the face of a pixel electrode facing the liquid crystal layer is formed flat, similarly to its face on the counter electrode side, and no level difference is formed in the pixel electrode near the end of the reflection section, thus making it possible to uniformly control the orientation of liquid crystal in a desired direction. Therefore, it is possible to provide a liquid crystal display device which has a high transmittance, excellent viewing angle characteristics, and little display unevenness.

The liquid crystal display device according to the present invention encompasses display apparatuses, television sets, mobile phones, etc., in which a liquid crystal panel is utilized. Although the present embodiment employs a transflective-type liquid crystal display device as an example, a reflection-type liquid crystal display device or the like having a configuration similar to the aforementioned reflection section is also encompassed as an embodiment of the present invention.

**INDUSTRIAL APPLICABILITY**

According to the present invention, a transflective-type liquid crystal display device and a reflection-type liquid crystal display device having a high image quality can be provide inexpensively. Liquid crystal display devices according to present invention are suitably used for various liquid crystal display devices, and are suitably used for transflective-type and reflection-type liquid crystal display devices which perform display by utilizing reflected light, e.g., mobile phones, onboard display devices such as car navigation systems, display devices of ATMs and vending machines, etc., portable display devices, laptop PCs, and the like.

**Claims**

1. A liquid crystal display device having a plurality of pixels, and comprising, in each of the plurality of pixels, a reflection region for reflecting incident light toward a display surface, wherein,
   the reflection region includes a metal layer, a semiconductor layer formed on the metal layer, and a reflective layer formed on the semiconductor layer;
   a plurality of first recesses or protrusions and a plurality of second recesses or protrusions are formed on a surface of the reflective layer;
   the plurality of first recesses or protrusions are formed so as to conform to the shapes of recesses or protrusions of the metal layer, and the plurality of second recesses or protrusions are formed so as to conform to the shapes of recesses or protrusions of the semiconductor layer; and
   the plurality of first recesses or protrusions have a plurality of first pairs of first recesses or protrusions adjoining along a first direction, the plurality of first pairs including two pairs whose intervals between recesses or protrusions are different from each other, or
   the plurality of second recesses or protrusions have a plurality of second pairs of second recesses or protrusions adjoining along a second direction, the plurality of second pairs including two pairs whose intervals between recesses or protrusions are different from each other.

2. The liquid crystal display device of claim 1, wherein the plurality of first recesses or protrusions have a plurality of third pairs of first recesses or protrusions adjoining along a third direction which is different from the first direction, and the plurality of third pairs include two pairs whose intervals between recesses or protrusions are different from each other.

3. The liquid crystal display device of claim 1, wherein the plurality of second recesses or protrusions have a plurality of fourth pairs of second recesses or protrusions adjoining along a fourth direction which is different from the second direction, and the plurality of fourth pairs include two pairs whose intervals between recesses or protrusions are different from each other.

4. The liquid crystal display device of claim 1, wherein, the plurality of first recesses or protrusions have a plurality of third pairs of first recesses or protrusions adjoining along a third direction which is different from the first direction, and the plurality of third pairs include two pairs whose intervals between recesses or protrusions are different from each other; and
   the plurality of second recesses or protrusions have a plurality of fourth pairs of second recesses or protrusions adjoining along a fourth direction which is different from the second direction, and the plurality of fourth pairs include two pairs whose intervals between recesses or protrusions are different from each other.

5. The liquid crystal display device of claim 1, wherein, on the surface of the reflective layer, at least either the plurality of first recesses or protrusions or the plurality of second recesses or protrusions are randomly disposed.

6. The liquid crystal display device of claim 5, wherein, on the surface of the reflective layer, both the plurality of first recesses or protrusions and the plurality of second recesses or protrusions are randomly disposed.

7. The liquid crystal display device of any one of claims 1 to 6, comprising a semiconductor element provided corresponding to each of the plurality of pixels, wherein,
   the metal layer, the semiconductor layer, and the reflective layer are made of same materials as those of a gate electrode, a semiconductor portion, and source and drain electrodes of the semiconductor element, respectively.

8. The liquid crystal display device of any one of claims 1 to 7, comprising a liquid crystal layer and an interlayer insulating layer and a pixel electrode interposed between the liquid crystal layer and the reflective layer, wherein a surface of the pixel electrode facing the liquid crystal layer is formed flat without conforming to shapes of the first recesses or protrusions and the second recesses or protrusions of the reflective layer.

*FIG.1*

TRANSMITTED
LIGHT

REFLECTED
LIGHT 10

40

38

36

34

16

28

26

22

32

LIGHT SOURCE

44 46 42

14

31

18

12

30

*FIG.2*

(a)

(b)

## FIG.3

(a)

(b)

## FIG.4

(a)

67

68

30

62

63
61
56

(b)

110
106
104
102

(c)

$\theta = 0°$

$0° < \theta < 30°$

$\theta = 30°$

## FIG.5

(a)

65
56

(b)

65
62
61

(c)

68
67
61
63

(d)

58
26

(e)

26
28

## FIG.6

(a)

(b)

(c)

(d)

(e)

*FIG.7*

*FIG.8*

*FIG.9*

TRANSMITTED
LIGHT

REFLECTED
LIGHT

40

14

16

28

22

31

18

30

*FIG.10*

100

112
110
108
106
104
102
101

*FIG.11*

218
206
205
204

222

203

211

*FIG.12*

(a)

(b)

REFLECTION SURFACE HAVING
TILTING ANGLE $\theta$

## INTERNATIONAL SEARCH REPORT

| | International application No. |
|---|---|
| | PCT/JP2007/073787 |

### A. CLASSIFICATION OF SUBJECT MATTER
*G02F1/1335*(2006.01)i, *G02F1/1368*(2006.01)i

According to International Patent Classification (IPC) or to both national classification and IPC

### B. FIELDS SEARCHED

Minimum documentation searched (classification system followed by classification symbols)
G02F1/1335, G02F1/1368

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2005-345757 A (Fujitsu Display Technologies Kabushiki Kaisha), 15 December, 2005 (15.12.05), Full text; Figs. 1 to 18 & US 2005/0270447 A1 | 1-8 |
| Y | JP 9-54318 A (NEC Corp.), 25 February, 1997 (25.02.97), Full text; Figs. 1 to 36 & US 6208395 B1 | 1-8 |
| Y | JP 10-325953 A (Sony Corp.), 08 December, 1998 (08.12.98), Full text; Figs. 1 to 27 (Family: none) | 8 |

| ☐ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 January, 2008 (15.01.08) | 29 January, 2008 (29.01.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9054318 A
- JP 2005277402 A
- JP 2002014211 A